# EUROPEAN PATENT SPECIFICATION

(11) **EP 1 215 105 B1**
(45) Date of publication and mention of the grant of the patent: **29.06.2005**
(21) Application number: 01129423.8
(22) Date of filing: 10.12.2001
(51) Int. Cl.: B62D 13/06

(54) **Traction apparatus of trailer**
Zugeinrichtung für einen Anhänger
Appareil de traction pour remorque

(30) Priority: 15.12.2000 JP 2000382900
(43) Date of publication of application: 19.06.2002
(73) Proprietor: Sato, Hiraku, Shinjyo-Shi, Yamagata 996-0031 (JP)
(72) Inventor: Sato, Hiraku, Shinjyo-Shi, Yamagata 996-0031 (JP)
(74) Representative: Cederbom, Hans Erik August

(56) References cited:
- DE-C- 818 728
- FR-A- 2 645 105
- US-A- 3 801 137

## Description

### BACKGROUND OF THE INVENTION

### Field of the Invention

The present invention relates to a trailer traveling in a state of being connected to a tractor, and more particularly to a traction apparatus of a trailer in which it is easy to steer to left and right turn at a time of backward traveling in a full trailer connected by a tow bar.

### Description of the prior art

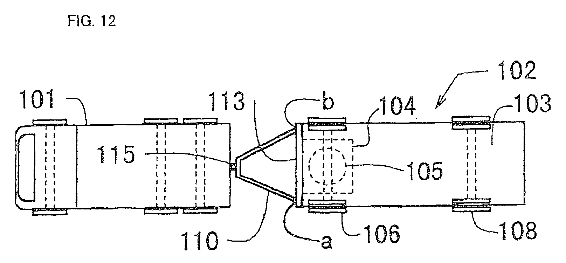

In conventional, a trailer, in particular, a full trailer (hereinafter, refer to "a trailer") 102 connected to a tractor 101 via a tow bar 110 is provided with a balanced full trailer 105 in which a front end portion of a truck frame 103 of the trailer 102 is rotatably supported via a rotor 104 around a vertical axis, as shown in Fig. 11, the balanced full trailer 105 and the truck frame 103 have front wheels 106 and rear wheels 108, the tow bar 110 is connected to two points at left and right positions a and b in a front cross member 113 of the balanced full trailer 105 so as to form a triangular shape as shown in Fig. 12, and a front end side of the tow bar 110 is rotatably connected to a connecting device 115 provided in a rear center portion of the trailer 101 by a lunette eye 114. Further, a backward travel of the trailer 102 is executed by rotating and steering the balanced full trailer 105 via the tow bar 110 while controlling an orientation of the tractor 101 according to a steering operation of the tractor 101.

However, conventionally, in this kind of full trailer, in the case of backward traveling in a state of being connected to the tractor, no particular difficulty exists in a linear backward movement, however, in a rounded backward moving operation to right and left, not only a significantly hard steering operation is compelled, but also a wide range of moving area is required. That is, a backward moving direction of the trailer 102 has been achieved by rotating the rotor 104 due to a force applied in a deflection manner to any one of the left and right points of the tow bar 110, that is, the connecting points a and b of the balanced full trailer 105, in correspondence to the backward moving direction of the tractor 101. Accordingly, it is necessary that the tractor 101 moves backward while operating the direction of the tractor 101 so that the force is applied to any one of the connecting points a and b of the tow rod 102 so as to rotate and steer the balanced full trailer 105. Since it is necessary to execute the steering operation of the tractor 101 so that a jackknife phenomenon bending around a connection portion 115 between the tractor 101 and the tow bar 110 is not generated and rotating direction of the balanced full trailer 105 is suitably transmitted to the tow bar 110, at a time of backward moving, it is significantly hard to steer a long vehicle body such as the full trailer so as to backward move to left and right in a rounded manner, so that not only a skill is required but also there is a problem that a wide space is required for setting in an indicated place.

FR 2645105 A discloses a traction apparatus of a trailer for steering of a full trailer front axle. Known apparatus require an extra turntable and it does not use an automatically engaged stopper. It use a hand lever operated device and not a device which can be controlled from the truck cabin. Told known device requires that the tow bar be hydraulically operated into linear position to the track and then being locked. The turning angle from the central line is not so wide only about 30°.

US 3801137 is a hydraulic solution applicable only for semi trailers. Said known apparatus only includes cylinders but not any extra locking device for limit laterally movement of the trailer.

### SUMMARY OF THE INVENTION

The present invention has been made by taking the problem mentioned above into consideration, and an object of the present invention is to provide a traction apparatus of a trailer in which a tractor can be steered only as a power for moving backward by independently steering a balanced full trailer itself with respect to a chassis frame without steering the balanced full trailer to a backward direction according to a steering operation of the tractor.

In order to achieve the object mentioned above, there is provided with a traction apparatus of a trailer provided with a balanced full trailer in a front portion of a truck frame so as to freely rotate around a vertical axis via a rotor and connecting a front end portion of the balanced full trailer to the tractor by a tow bar, comprising:
a pair of hydraulic cylinders rotating the rotor in a clockwise direction and a counterclockwise direction so as to freely rotate and steer the balanced full trailer around the vertical axis with respect to the truck frame;
a bracket provided in a front surface center portion of a front end cross member of the balanced full trailer;
a rotary body provided in the bracket so as to freely rotate around the vertical axis;
a stopper engaging with the rotary body so as to hold the rotary body in a non-rotatable state or being apart from the rotary body so as to make the rotary body in a rotatable state; and
a straight long tow bar connected and placed to the rotary body.

Further, preferably, there is provided with a traction apparatus of a trailer provided with a balanced full trailer in a front portion of a truck frame so as to freely rotate around a vertical axis via a rotor and connecting a front end portion of the balanced full trailer to the tractor by a tow bar, comprising:
a bracket provided in front surface center portion of a front end cross member of the balanced full trailer;
a rotary body provided in the bracket so as to freely rotate around the vertical axis;
a stopper engaging with the rotary body so as to hold the rotary body in a non-rotatable state or being apart from the rotary body so as to make the rotary body in a rotatable state;
a straight long tow bar connected and placed to the rotary body;
a pair of hydraulic cylinders rotating the rotor in a clockwise direction and a counterclockwise direction and provided at left and right points of the front end cross member of the balanced full trailer, respective expansion and contraction rods of the hydraulic cylinders being connected and placed to symmetrical positions of the two bar so as to freely rotate and steer the balanced full trailer around the vertical axis with respect to the truck frame.

### BRIEF DESCRIPTION OF THE DRAWINGS

Fig. 1 is a schematic side view showing a state that a tractor is connected to a trailer according to the present invention;
Fig. 2 is a schematic plan view showing a state that the tractor is connected to the tractor according to the present invention;
Fig. 3 is an enlarged side view of a main portion showing in a partly notched manner a state that a front portion of the trailer according to the present invention and a tow bar are placed;
Fig. 4 is an enlarged plan view of a main portion showing in a partly notched manner a state that the front portion of the trailer according to the present invention and the tow bar are placed;
Fig. 5 is an exploded perspective view of a connection assembly of the tow bar according to the present invention;
Fig. 6 is an enlarged vertical cross sectional side view showing a position of a stopper at a time of forward moving of the connection assembly according to the present invention;
Fig. 7 is an enlarged plan view showing the position of the stopper at a time of forward traveling of the connection assembly according to the present invention;
Fig. 8 is an enlarged plan view showing a position of the stopper at a time of backward traveling of the connection assembly according to the present invention;
Fig. 9 is a schematic plan view showing a relation among the trailer, the tow bar, the balanced full trailer and a truck frame at a time of backward traveling according to the present invention;
Fig. 10 is a plan view showing another embodiment according to the present invention in a state of connecting the tractor of the trailer;
Fig. 11 is a schematic side view showing a state that the tractor is connected to a conventional trailer; and
Fig. 12 is a schematic plan view showing a state that the tractor is connected to the conventional trailer.

### DESCRIPTION OF THE PREFERRED EMBODIMENT

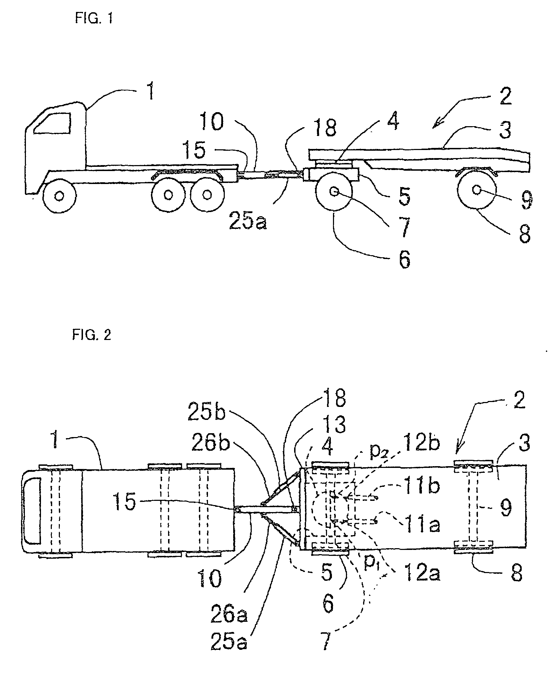

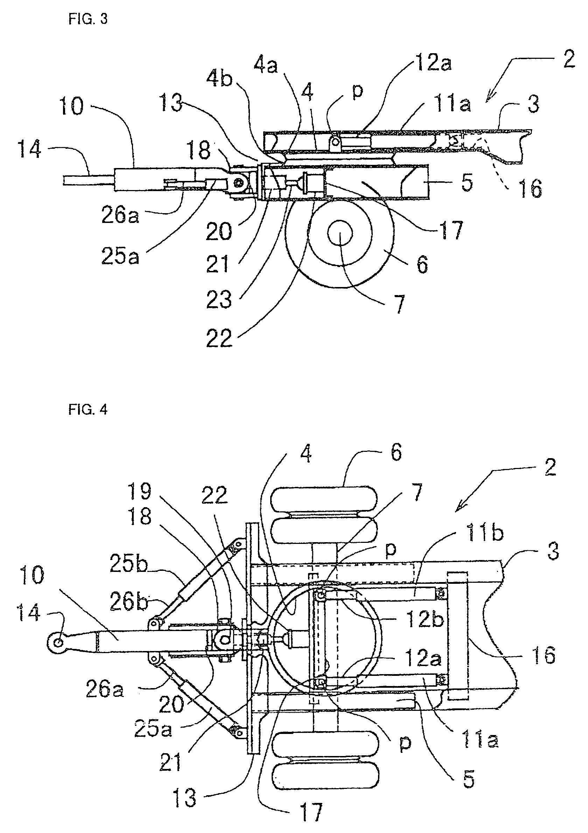

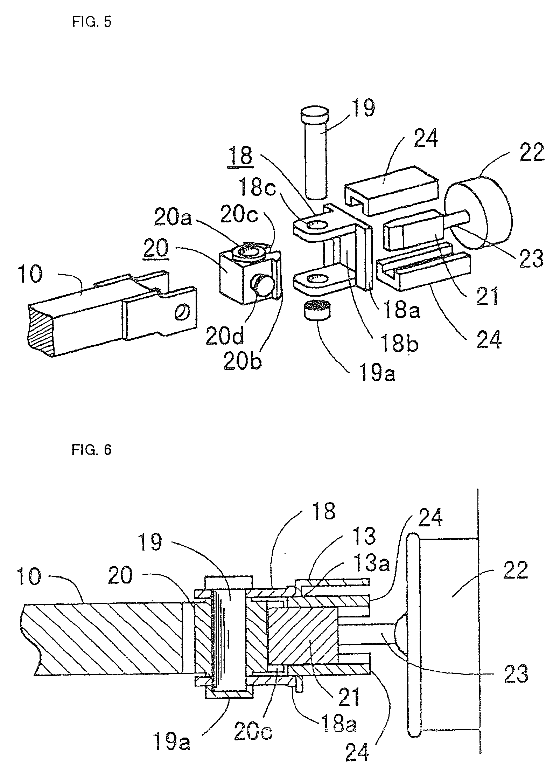

A description will be given below of an embodiment according to the present invention with reference to the accompanying drawings. Fig. 1 is a schematic side view showing a state that a tractor is connected to a trailer, Fig. 2 is a plan view thereof, Fig. 3 is an enlarged side view of a main portion showing a state that a front portion of the trailer and a tow bar are placed, Fig. 4 is a plan view of the main portion, and Fig. 5 is an exploded perspective view of a connection assembly of the tow bar. Reference numeral 1 denotes a tractor, reference numeral 2 denotes a trailer, the trailer 2 is provided with a balanced full trailer 5 capable of rotating around a vertical axis via a rotor 4 in a front portion of a truck frame 3, an axle 7 of front wheels 6 is suspended to the balanced full trailer 5, and an axle 9 of rear wheels 8 is suspended to the truck frame 3. Further, the trailer 2 connects a front end of the balanced full trailer 5 to a rear end portion of the tractor 1 by a tow bar 10.

In accordance with the present invention, a pair of hydraulic cylinders 11a and 11b for rotating in a clockwise direction and in a counterclockwise direction are provided in the rotor 4, the structure is made such as to rotate steer the rotor 4 in a clockwise direction or in a counterclockwise direction by expanding and contracting expansion and contraction rods 12a and 12b of a pair of hydraulic cylinders 11a and 11b, the tow bar 10 formed in a straight long shape via a connection assembly mentioned below is placed in a center portion of a front end cross member 13 of the balanced full trailer 5 so as to be fixedly held and freely rotate, and an eyelet 14 at a front end of the tow bar 10 is connected and placed to a connecting device 15, for example, spindle hook or the like, provided in a rear center portion of the tractor 1 in a such a manner as to freely rotate and freely engage and disengage.

The rotor 4 is structured such that an outer ring 4a corresponding to a fixed side is adhered to the balanced full trailer 5 and an inner ring 4b corresponding to a moveable side is adhered to the truck frame 3, and is placed so as to rotate and steer the inner ring 4b in a clockwise direction and a counterclockwise direction by a pair of hydraulic cylinders 11a and 11b for rotating in a clockwise direction and in a counterclockwise direction. That is, a pair of hydraulic cylinders 11a and 11b are pivoted and placed to a cleat 16 crossing over the truck frame 3, the respective expansion and contraction rods 12a and 12b of the hydraulic cylinders 11a and 11b are pivoted and placed at left and right positions P₁ and P₂ of a cleat 17 crossing over the inner ring 4b of the rotor 4 so as to pass through a substantially center of the inner ring 4b and be parallel to the axle 7, and the balanced full trailer 5 is rotated according to the expanding and contracting operation of the expansion and contraction rods 12a and 12b.

In this case, it is preferable that the hydraulic cylinders 11a and 11b can be expanded and contracted from a driver's seat of the tractor 1 by a remote control apparatus.

Further, in this embodiment, a pair of hydraulic cylinders 11a and 11b are placed in the truck frame 3, however the hydraulic cylinders 11a and 11b may be placed in the balanced full trailer 5, and even in this case, the expansion and contraction rods 12a and 12b can be provided in the inner ring 4b corresponding to the moveable side.

The connection assembly of the two bar 10 is constituted by a bracket 18 adhered and placed to a front center portion of the front end cross member 13 in the balanced full trailer 5, a rotary body 20 received in the bracket 18 and provided so as to freely rotate around a vertical axis by a pin 19, and a stopper 21 engaging with the rotary body 20 so as to maintain the rotary body in a non-rotatable state.

The bracket 18 is, as shown in Figs. 5 and 6, such that a through hole 18b is pierced in a center portion of a mounting plate portion 18a, a through hole 13a is pierced in the cross member 13, and the through hole 18b of the mounting plate portion 18a and the through hole 13a of the cross member 13 are overlapped and communicated with each other so as to be adhered and placed.

A pin hole 18c is pierced so as to vertically pass through the bracket 18, a pin hole 20a overlapping and communicating with the pin hole 18c is pierced in the rotary body 20 so as to pass through from an upper surface to a lower surface, and the rotary body 20 is placed so as to freely rotate around a vertical axis by inserting and attaching a pin 19 thereto. Further, the rotary body 20 is structured such that a circular surface 20b concentric with the pin hole 20a is provided in one side surface facing to the mounting plate portion 18a of the bracket 18, a wedge-shaped recess portion 20c is pierced in a center portion of the circular surface 20b and connecting shafts 20d are integrally formed on left and right side surfaces in a protruding manner so as to be orthogonal to the wedge-shaped recess portion 20c, the rotary body 20 is placed so that the circular surface 20b thereof faces to the mounting plate portion 18a of the bracket 18, and the tow bar 10 is mounted to the connected shafts 20d. Further, the wedge-shaped recess portion 20c is communicated with the mounting plate portion 18a in a state that the tow bar 10 is orthogonal with respect to the front end cross member 13 of the balanced full trailer 5. In this case, reference numeral 19a denotes a cap of the pin 19.

The stopper 21 having a front end formed in a wedge shape is provided in a back surface of the cross member 13, and the stopper 21 is connected to an operating shaft 23 of an accumulator 22 in a freely forward and backward moving manner and is placed so as to freely engage a front end of the stopper 21 with the wedge-shaped recess portion 20c of the rotary body 20 via the through holes 13a and 18b pierced in the cross member 13 and the mounting plate portion 18a of the rotary body 20. Further, at a time of forward traveling, the stopper 21 engages with the wedge-shaped recess portion 20c of the rotary body 20 so as to make a normal travel possible. Further, at a time of backward moving, the stopper 21 is away from the wedge-shaped recess portion 20c of the rotary body 20, whereby the rotary body 20 can freely rotate around a vertical axis within a fixed range by the circular surface 20.

In this case, a pair of upper and lower stopper guide frames 24 constituting a U-shaped frame are connected and placed to the mounting plate portion 18a of the rotary body 20 via the through hole 18b from the back surface of the front end cross member 13 so as to conduct and guide the front end of the stopper 21 to the wedge-shaped recess portion 20c of the rotary body 20 according to a forward and backward guiding operation of the stopper 21.

Further, a pair of hydraulic cylinders 25a and 25b are provided at symmetrical positions of the tow bar 10. Base end portions of a pair of hydraulic cylinders 25a and 25b are swingably placed at left and right positions of the front end cross member 13 in the balanced full trailer 5, and front ends of expansion and contraction rods 26a and 26b are placed at symmetrical positions of left and right side surfaces of the tow bar 10. Further, a pair of hydraulic cylinders 25a and 25b serve as a damper for filling up a deficiency in a strength of the connection assembly.

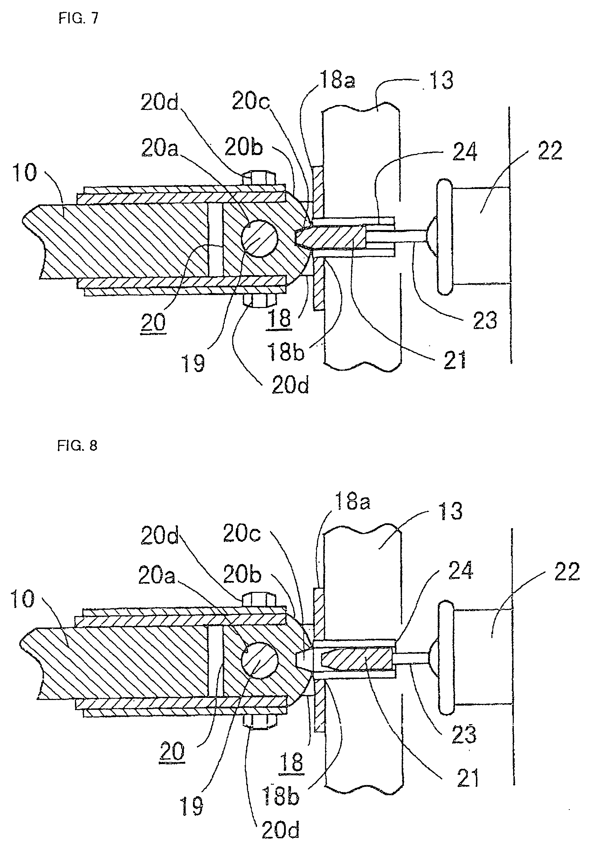

Accordingly, the traction apparatus of the trailer according to the present invention is fixed and held in a state that the rotation of the rotary body 20 can not executed, by operating the accumulator 22 so as to insert and engage the front end of the stopper 21 with respect to the wedge-shaped recess portion 20c of the rotary body 20, as shown in Figs. 6 and 7 during the forward traveling, and the tow bar 10 is fixed and maintained in an orthogonal state with respect to the front end cross member 13 of the balanced full trailer 5. Accordingly, the tow bar 10 according to the present invention can travel with guiding the balanced full trailer 5 so as to rotate in a rounded direction together with the forward rounded traveling of the tractor 1, in the same manner as the conventional tow bar.

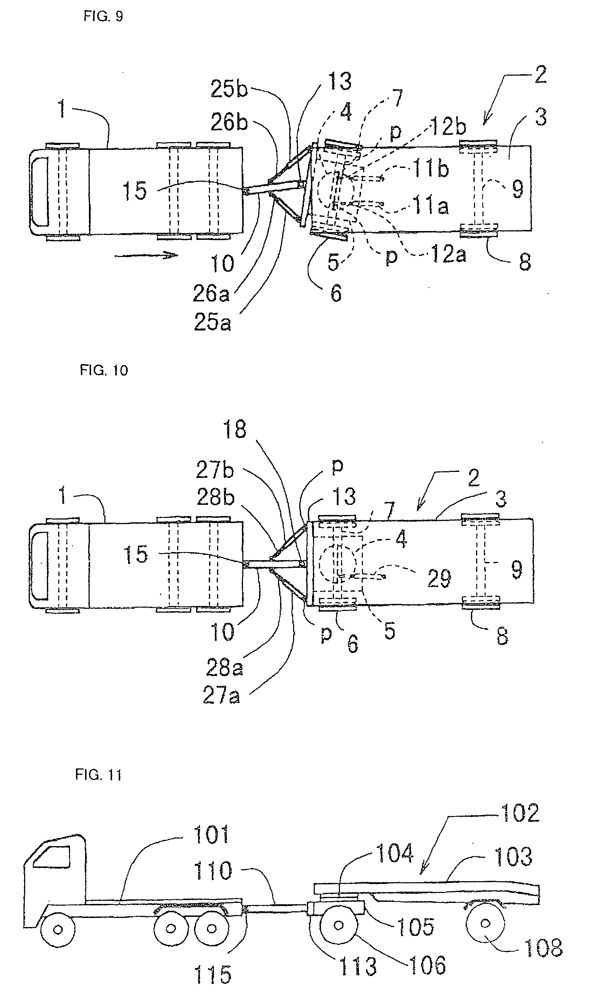

Further, in the backward traveling, as shown in Fig. 8, the rotary body 20 can freely rotate around the pin 19 by operating the accumulator 22 so as to move the front end of the stopper 21 away from the wedge-shaped recess portion 20c of the rotary body 20, and the tow bar 10 becomes in a rotatable state around the vertical axis by the rotary body 20. In this state, by operating the remote control apparatus from the driver's seat of the tractor 1 so as to rotate the rotor 4 in any one desired rotational direction by the expansion and contraction rod 12a or 12b of the hydraulic cylinder 11a of 11b provided in the truck frame 3, the balanced full trailer 5 is rotated in a desired turning direction with respect to the truck frame 3, the balanced full trailer 5 rotates and bends at the connection portion so as to steer the front wheels 6 in the desired turning direction, as shown in Fig. 9, and in this state, the backward travel of the trctor 1 is sufficient to serve only as a power for simply backward moving the trailer 2, so that it is not at all necessary to execute a steering operation for steering the balanced full trailer 5.

Fig. 10 shows another embodiment according to the present invention. The connection assembly of the tow bar 10 is the same as the assembly shown in Fig. 5, and is constituted by the bracket 18 adhered and placed to the front center portion of the front end cross member 13 in the balanced full trailer 5, the rotary 20 received in the bracket 18 and provided so as to freely rotate around the vertical axis by the pin 19, and the stopper 21 engaging with the rotary body 20 so as to maintain the rotary body in a non-rotatable state. At a time of straight traveling, the stopper 21 engages with the wedge-shaped recess portion 20c of the rotary body 20, whereby the rotary body is in a state of incapable of rotating, and at a time of backward travelling, the stopper 21 is moved away from the wedge-shaped recess portion of the rotary body 20, whereby the rotary body 20 is in a state of capable of rotating around the vertical axis.

In this embodiment, a pair of left and right hydraulic cylinders 27a and 27b are symmetrically placed with holding the two bar 10 therebetween. A pair of cylinders 27a and 27b are pivotally placed at left and right points P₃ and P₄ of the front end cross member 13 in the balanced full trailer 5, respectively, and the respective expansion and contraction rods 28a and 28b are pivotally placed at symmetrical positions on the left and right side surfaces of the tow bar 10.

Further, at least one hydraulic cylinder 29 serving as a damper is provided in the inner ring 4b corresponding to the moveable side of the rotor 4.

Therefore, according to this embodiment, at a time of backward traveling, when operating the expansion and contraction rod 28a and 28b by operating the hydraulic cylinder 27a or 27b opposite to a side to be rotated, by the remote control apparatus in the driver's seat, the balanced full trailer 5 rotates around the vertical axis via the rotary body in the connection portion of the tow bar 10 so as to make it possible to steer the front wheels 6 in a desired turning direction. Then, the trailer 1 serves only as a power source for moving backward.

Since the present invention is structured in the manner mentioned above, the backward travel of the trailer can significantly easily and simply define the backward direction of the balanced full trailer by directly steering the balanced full trailer, and the trailer serves only as the power of backward traveling, there is obtained an effect that the backward steering of the trailer can be made significantly easy.

## Claims

1. A traction apparatus of a trailer (2) provided with a balanced full trailer (5) in a front portion of a truck frame (3) so as to freely rotate around a vertical axis (7) via a rotor (4) and connecting a front end portion of said balanced full trailer to the tractor (1) by a tow bar (10),
said traction apparatus comprising
a pair of hydraulic cylinders (11a, 11b) rotating said rotor in a clockwise direction and a counterclockwise direction so as to freely rotate and steer the balanced full trailer (5) around the vertical axis (7) with respect to the truck frame (3);
a bracket (18) provided in a front surface center portion of a front end cross member (13) of said balanced full trailer (5);
a rotary body (20) provided in said bracket (18) so as to freely rotate around the vertical axis (19) and
a stopper (21) being **characterised in that** the stopper engages with said rotary body (20) so as to hold said rotary body (20) in a non-rotatable state or being apart from said rotary body (20) so as to make the rotary body (20) in a rotatable state; and
a straight long tow bar (10) is connected and placed to said rotary body (20),
the stopper (21) has a front end formed in a wedge shape,
a wedge-shaped recess portion (20C) is pierced in a center portion of a circular surface (20b) on the rotary body, and the stopper (21) is connected to an operating shaft (23) of an accumulator (22) in a freely forward and backward moving manner and is placed so as to freely engage a front end of the stopper (21) with the wedge-shaped recess portion (20C) of the rotary body (20) when driving forward.

2. A traction apparatus according to claim 1, **characterized in that**, a through hole (18b) is pierced in a center portion of a mounting plate portion (18a) of the bracket (18), a trough hole (13a) is pierced in the cross member (13), and the through hole (18b) of the mounting plate portion (18a) and the trough hole (13a) of the cross member (13) are overlapped and communicated with each other so as to be adhered and placed.

3. A traction apparatus according to claim 2, **characterized in that**, a pin hole (18c) is pierced so as to vertically pass trough the bracket (18), a pin hole (20a) overlapping and communicating with said pin hole (18c) is pierced in the rotary body (20) so as to pass trough from an upper surface to a lower surface, and the rotary body (20) is placed so as to freely rotate around a vertical axis by inserting and attaching a pin (19) thereto.

4. A traction apparatus according to claim 3, **characterized in that**, the rotary body (20) is structured such that told circular surface (20b) is concentric with told pin hole (20a) and provided in one side surface facing to the mounting plate portion (18a) of the bracket (18).

5. A traction apparatus according to claim 4, **characterized in that**, told wedge-shaped recess portion (20c) is pierced in the center portion of told circular surface (20b) and connecting shafts (20d) are integrally formed on left and right side surface in a protruding manner so as to be orthogonal to the wedge-shaped recess portion (20c).

6. A traction apparatus according to claim 5, **characterized in that**, the rotary body (20) is placed so that the circular surface (20b) thereof faces to the mounting plate portion (18a) of the bracket (18), and the tow bar (10) is mounted to the connected shafts (20d).

7. A traction apparatus according to claim 6, **characterized in that,** the told wedge-shaped recess portion (20c) is communicated with the mounting plate portion (18a) in a state that the tow bar (10) is orthogonal with respect to the front end cross member (13) of the balanced full trailer (5).

8. A traction to any of the previously told claims, **characterized in that,** the hydraulic cylinders (11a and 11b) can be expanded and contracted from a driver's seat of the tractor (1) by a remote control apparatus.

## Patentansprüche

1. Zugvorrichtung für einen Hänger (2), die mit einem ausgeglichenen Vollanhänger (5) in einem vorderen Abschnitt eines Wagenrahmens (3) versehen ist, um sich so frei um eine vertikale Achse (7) über einen Rotor (4) drehen zu können, und einen vorderen Endabschnitt des ausgeglichenen Vollanhängers durch eine Zugstange (10) mit der Zugmaschine (1) verbindet,
wobei die Zugvorrichtung umfasst:
ein Paar hydraulischer Zylinder (11a, 11b), die den Rotor in einer Richtung im Uhrzeigersinn und entgegen dem Uhrzeigersinn drehen, um so den ausgeglichenen Vollanhänger (5) um die vertikale Achse (7) bezüglich des Wagenrahmens (3) frei drehen und steuern zu können;
eine Halterung (18), die in einem Zentralabschnitt der Vorderfläche eines vorderen Stirnquerelementes (13) des ausgeglichenen Vollanhängers vorgesehen ist;
einen Drehkörper (20), der in der Halterung (18) vorgesehen ist, um so frei um die vertikale Achse (19) drehen zu können; und
eine Stoppeinrichtung (21), **dadurch gekennzeichnet, dass** die Stoppeinrichtung mit dem Drehkörper (20) in Eingriff tritt, um den Drehkörper (20) in einem nicht drehbaren Zustand zu halten, oder von dem Drehkörper (20) entfernt ist, um den Drehkörper (20) in einen drehbaren Zustand zu versetzen; und
einer geraden langen Zugstange (10), die mit dem Drehkörper (20) verbunden und daran angeordnet ist,
wobei die Stoppeinrichtung (21) ein vorderes Ende aufweist, das in eine Keilform ausgebildet ist,
ein Abschnitt (20c) mit keilförmiger Ausnehmung in einen Zentralabschnitt einer kreisförmigen Fläche (20b) an dem Drehkörper gebohrt bzw. gestanzt ist und die Stoppeinrichtung (21) mit einer Betriebswelle (23) eines Akkumulators (22) in einer sich frei vorwärts und rückwärts bewegenden Art und Weise verbunden und so angeordnet ist, um bei Vorwärtsfahrt ein vorderes Ende der Stoppeinrichtung (21) frei mit dem Abschnitt (20c) mit keilförmiger Ausnehmung des Drehkörpers (20) in Eingriff zu bringen.

2. Zugvorrichtung nach Anspruch 1,
**dadurch gekennzeichnet,**
**dass** ein Durchgangsloch (18b) in einen Zentralabschnitt eines Befestigungsplattenabschnitts (18a) der Halterung (18) gebohrt ist, ein Durchgangsloch (13a) in das Querelement (13) gebohrt ist und das Durchgangsloch (18b) des Befestigungsplattenabschnitts (18a) und das Durchgangsloch (13a) des Querelementes (13) überlappt sind und miteinander in Verbindung stehen, um so aneinander angehaftet und angeordnet zu werden.

3. Zugvorrichtung nach Anspruch 2,
**dadurch gekennzeichnet,**
**dass** ein Stiftloch (18c) gebohrt ist, das vertikal durch die Halterung (18) verläuft, ein Stiftloch (20a), das mit dem Stiftloch (18c) überlappt und mit diesem in Verbindung steht, in den Drehkörper (20) gebohrt ist, so dass es von einer oberen Fläche hindurch zu einer unteren Fläche verläuft, und der Drehkörper (20) so angeordnet ist, dass er sich frei um eine vertikale Achse drehen kann, indem ein Stift (19) darin eingesetzt und angebracht wird.

4. Zugvorrichtung nach Anspruch 3,
**dadurch gekennzeichnet,**
**dass** der Drehkörper (20) derart ausgebildet ist, dass die kreisförmige Fläche (20b) konzentrisch mit dem Stiftloch (20a) ausgebildet ist und in einer Seitenfläche vorgesehen ist, die zu dem Befestigungsplattenabschnitt (18a) der Halterung (18) weist.

5. Zugvorrichtung nach Anspruch 4,
**dadurch gekennzeichnet,**
**dass** der Abschnitt (20c) mit keilförmiger Ausnehmung in den Zentralabschnitt der kreisförmigen Fläche (20b) gebohrt ist und Verbindungswellen (20d) einteilig an der linken und rechten Seitenfläche in einer vorstehenden Art und Weise ausgebildet sind, so dass sie orthogonal zu dem Abschnitt (20c) mit keilförmiger Ausnehmung liegen.

6. Zugvorrichtung nach Anspruch 5,
**dadurch gekennzeichnet,**
**dass** der Drehkörper (20) derart angeordnet ist, dass seine kreisförmige Fläche (20b) zu dem Befestigungsplattenabschnitt (18a) der Halterung (18) weist und die Zugstange (10) an den verbundenen Wellen (20d) angebracht ist.

7. Zugvorrichtung nach Anspruch 6,
**dadurch gekennzeichnet,**
**dass** der Abschnitt (20c) mit keilförmiger Ausnehmung mit dem Befestigungsplattenabschnitt (18a) in einem Zustand in Verbindung steht, in dem die Zugstange (10) orthogonal bezüglich des vorderen Stirnquerelementes (13) des ausgeglichenen Vollanhängers (5) angeordnet ist.

8. Zugvorrichtung nach einem der vorhergehenden Ansprüche,
**dadurch gekennzeichnet,**
**dass** die Hydraulikzylinder (11a und 11b) von einem Sitz eines Fahrers der Zugmaschine (1) durch eine Fernsteuervorrichtung ausgefahren und zusammengezogen werden können.

## Revendications

1. Dispositif de traction pour remorque (2) comprenant :
. une remorque entièrement portée (5) dans une partie avant d'un châssis (3) de manière à pivoter librement autour d'un axe vertical (7) par l'intermédiaire d'un rond d'avant train (4), dispositif reliant une partie d'extrémité frontale de ladite remorque entièrement portée au tracteur (1) par une barre de remorquage (10),
. une paire de vérins hydrauliques (11a, 11b) pivotant ce rond d'avant train dans le sens des aiguilles d'une montre et dans le sens contraire des aiguilles d'une montre de manière à pivoter et à diriger librement la remorque entièrement portée (5) autour de l'axe vertical (7) par rapport au châssis de la remorque (3) ;
. un support (18) monté sur la partie centrale d'une traverse d'extrémité avant (13) de cette remorque entièrement portée (5) ;
. un corps pivotant (20) monté sur ce support (18) de manière à pivoter librement autour de l'axe vertical (19) ;
. et une pièce de butée (21)
**caractérisé en ce que** la pièce de butée (21) soit s'engage dans ledit corps pivotant (20) de manière à le maintenir dans un état de non pivotement, soit est dissociée dudit corps pivotant (20) pour mettre le corps pivotant (20) dans un état de pivotement ; et
**en ce qu'**une longue barre rectiligne de remorquage (10) est reliée et positionnée contre ledit corps pivotant (20),
**en ce que** la pièce de butée (21) présente une extrémité frontale conformée en coin,
**en ce qu'**une partie évidée en coin (20c) est percée dans une partie centrale d'une surface cylindrique (20b) sur le corps pivotant, et
**en ce que** la pièce de butée (21) est reliée libre en mouvements avant et arrière à une tige de commande (23) d'un accumulateur (22), celle-ci étant placée de manière à emboîter librement une extrémité frontale de la pièce de butée (21) dans la cavité en coin (20c) du corps pivotant (20) lors de la marche avant.

2. Dispositif de traction selon la revendication 1, **caractérisé en ce qu'**un alésage traversant (18b) est percé dans une partie centrale d'une plaque de fixation (18a) du support (18), **en ce qu'**un alésage traversant (13a) est percé dans la traverse (13) de cadre de châssis, et **en ce que** l'alésage traversant (18b) de la plaque de fixation (18a) et l'alésage traversant (13a) de la traverse (13) de cadre de châssis se chevauchent et communiquent l'un avec l'autre de manière à être rendus solidaires et maintenus en place.

3. Dispositif de traction selon la revendication 2, **caractérisé en ce qu'**un perçage pour broche (18c) traverse verticalement le support (18), **en ce qu'**un perçage pour broche (20a) chevauchant ce perçage (18c) et communiquant avec lui est réalisé dans le corps pivotant (20) de manière à le traverser d'une surface supérieure vers une surface inférieure, et **en ce que** le corps pivotant (20) est positionné de manière à pivoter librement autour d'un axe vertical en y introduisant et en y fixant une broche (19).

4. Dispositif de traction selon la revendication 3, **caractérisé en ce que** le corps pivotant (20) est structuré de manière à ce que ladite surface cylindrique (20b) soit concentrique au perçage pour broche (20a) et soit prévue sur une surface latérale en regard de la plaque de fixation (18a) du support (18).

5. Dispositif de traction selon la revendication 4, **caractérisé en ce que** la partie évidée conformée en coin (20c) est creusée dans la partie centrale de ladite surface cylindrique (20b) et **en ce que** des tenons d'assemblage (20d) sont formés d'une seule pièce avec la surface latérale droite et gauche en saillie de manière à être orthogonaux à la partie évidée conformée en coin (20c).

6. Dispositif de traction selon la revendication 5, **caractérisé en ce que** le corps pivotant (20) est positionné de manière à ce que la surface cylindrique (20b) de celui-ci vienne en regard de la plaque de fixation (18a) du support (18) et **en ce que** la barre de remorquage (10) est montée sur les tenons d'assemblage (20d).

7. Dispositif de traction selon la revendication 6, **caractérisé en ce que** ladite partie évidée conformée en coin (20c) communique avec la plaque de fixation (18a) dans une configuration dans laquelle la barre de remorquage (10) est orthogonale par rapport à la traverse d'extrémité avant (13) du châssis de la remorque entièrement portée (5).

8. Dispositif de traction selon l'une quelconque des revendications précédentes, **caractérisé en ce que** les vérins hydrauliques (11a, 11b) peuvent être étendus et rétractés depuis le siège du conducteur du tracteur (1) par un dispositif de commande à distance.
